# EUROPÄISCHE PATENTSCHRIFT

(11) **EP 2 951 000 B1**
(45) Veröffentlichungstag und Bekanntmachung des Hinweises auf die Patenterteilung: **07.04.2021**
(21) Anmeldenummer: 14702007.7
(22) Anmeldetag: 29.01.2014
(51) Int. Cl.: B29C 48/92, B29C 48/49, B29C 48/21, B29C 48/08, B29C 48/10

(54) **VERFAHREN UND VORRICHTUNG FÜR DIE INDIREKTE BESTIMMUNG EINER SPEZIFISCHEN REZEPTUR BEIM EXTRUDIEREN**
METHOD AND DEVICE FOR THE INDIRECT DETERMINATION OF A SPECIFIC FORMULATION DURING EXTRUSION
PROCÉDÉ ET DISPOSITIF DE DÉTERMINATION INDIRECTE D'UNE FORMULATION D'EXTRUSION SPÉCIFIQUE

(30) Priorität: 29.01.2013 DE 102013100866
(43) Veröffentlichungstag der Anmeldung: 09.12.2015
(73) Patentinhaber: Windmöller & Hölscher KG, 49525 Lengerich (DE)
(72) Erfinder: SCHMITZ, Torsten, 48268 Greven (DE)
(74) Vertreter: Vogel, Andreas
(86) Internationale Anmeldenummer: PCT/EP2014/051734
(87) Internationale Veröffentlichungsnummer: WO 2014/118243

(56) Entgegenhaltungen:
- EP-A1- 2 392 446
- WO-A2-01/97090
- DE-A1- 3 303 766
- DE-A1- 3 512 398
- DE-A1- 3 820 281
- DE-A1-102006 031 268
- GB-A- 2 177 819
- US-A- 5 714 187
- US-A1- 2010 295 199
- HERRMANN H: "AUF DEM WEG ZUR FLEXIBLEN UND INTELLIGENTEN AUFBEREITUNGSANLAGE", KUNSTOFFE, CARL HANSER VERLAG, MUNCHEN, DE, Bd. 78, Nr. 10, 1. Oktober 1988 (1988-10-01), Seiten 876-884, XP000052617, ISSN: 0023-5563
- WORTBERG J: "AUTOMATISIERUNG DER PROFILEXTRUSION", KUNSTOFFE, CARL HANSER VERLAG, MUNCHEN, DE, Bd. 78, Nr. 12, 1. Dezember 1988 (1988-12-01), Seiten 1161-1167, XP000029248, ISSN: 0023-5563
- PETER FISCHER: "Neue Wege - fÃ 1/4 r die Automatisierung der Rohrextrusion", KUNSTSTOFFBERATER,, Bd. 30, Nr. 3, 1. März 1985 (1985-03-01), Seiten 27-31, XP001354048,

## Beschreibung

Die vorliegende Erfindung betrifft ein Verfahren für die indirekte Bestimmung einer spezifischen Rezeptur bei einem Extrusionsverfahren in einer Extrusionsvorrichtung sowie eine Extrusionsvorrichtung zur Herstellung eines Extrusionsproduktes.

Es ist bekannt, dass Extrusionsprodukte mithilfe von Extrusionsvorrichtungen hergestellt werden. Dabei kann es sich z. B. um Folien bzw. Blasfolien oder Gießfolien, etc. handeln, die mit einer Extrusionsvorrichtung erzeugt werden. Hierfür weist eine Extrusionsvorrichtung insbesondere eine Extruderschnecke auf, in welcher eine zugehörige Rezeptur aufgeschmolzen und gefördert wird. Dabei kann eine Extrusionsvorrichtung selbstverständlich auch mehr als eine Extruderschnecke, insbesondere eine Vielzahl von bis zu dreizehn einzelnen Extruderschnecken aufweisen. Die Anforderungen an Extrusionsprodukte sind in vielfältiger Weise gestiegen, so dass insbesondere vielschichtige Extrusionsprodukte z. B. mit unterschiedlichsten Barriereeigenschaften für die Folie ausgestattet sein sollen. Hierfür sind unterschiedlichste Materialien notwendig, um die einzelnen Schichten des Extrusionsproduktes auszubilden. Bei bis zu dreizehn Extruderschnecken und jeweils bis zu fünf Materialien sind somit bis zu 65 verschiedene Materialien zuzuführen, um ein einziges Extrusionsprodukt mit vielschichtigem Aufbau zur Verfügung zu stellen. Jedes spezifische Extrusionsprodukt ist dabei mit einer spezifischen Materialrezeptur versehen. Eine solche spezifische Rezeptur kann also eine beliebige Anzahl einzelner Materialien zwischen einem einzigen Material und einer Vielzahl von z. B. bis zu 65 Materialien aufweisen.

Nachteilhaft bei bekannten Extrusionsverfahren ist es, dass die spezifische Rezeptur nur mit hohem Aufwand überwacht werden kann. So sind grundsätzlich vollautomatische Zufuhrsysteme aus den Druckschriften GB 2 177 819 A und US 5 714 187 A bekannt, welche mit Silosystemen zusammenwirken. Aus einer Vielzahl von Materialsilos wird entsprechend der spezifischen Rezeptur die jeweilige Extruderschnecke der Extrusionsvorrichtung mit der spezifischen Rezeptur versorgt. Dies ist jedoch ein immenser Aufwand hinsichtlich Kosten und Bauraum für eine solche vollautomatische Siloanlage. Üblicherweise werden die einzelnen Materialien in Vorlagebehälter in tonnenform gefüllt und von dort z. B. mittels Sauglanzen der Extrusionsvorrichtung zugeführt. Auch können über die Sauglanzen Vorlagebehälter in Form von Gewichtstrichtern oder Vorlagetrichtern gefüllt werden. In allen diesen Fällen erfolgt eine manuelle Einstellung der Rezeptur in Form von bewusstem Stecken der Sauglanzen bzw. explizitem Einfüllen von Materialien in zugehörige Vorratsbehälter. All dies erfolgt manuell durch den Bediener der Extrusionsvorrichtung. Durch die manuelle Bedienweise sind dementsprechend menschliche Fehlerquellen gegeben, so dass das Risiko einer falschen Materialzusammensetzung für die spezifische Rezeptur besteht. Eine falsche Materialzusammensetzung kann zu einem falschen Extrusionsprodukt z. B. in Form einer falsch zusammengesetzten mehrschichtigen Folie führen. Dies führt wiederum zu Folieneigenschaften bzw. Produkteigenschaften des Extrusionsproduktes, die von den gewünschten mehr oder weniger stark abweichen. Solche Produkteigenschaften können z. B. die Siegelbarkeit, die Transparenz, das Gewicht oder die Barriereeigenschaften dieses Extrusionsproduktes sein. Im schlimmsten Fall fällt eine fehlerhafte Rezeptur erst nach Fertigstellung des gesamten Extrusionsproduktes auf, wenn es in der Weiterverarbeitung bei einem Kunden eingesetzt werden soll. In einem solchen Fall wird das gesamte Extrusionsprodukt als Ausschuss betrachtet, was hohen Material- und Kostenschaden mit sich bringt.

Ein weiterer Nachteil besteht darin, dass selbst eindeutige gekennzeichnete und per detailliertem Datenblatt spezifizierte Rohstoffe mehr oder weniger starken Chargenschwankungen unterworfen sein können. Dies kann einerseits das direkte Resultat des Polymerisationsprozesses sein, bei dem Chargenschwankungen in mehr oder weniger eng tolerierten Grenzen auftreten. Andererseits ist es heute infolge der zunehmenden Globalisierung auch üblich, dass der gleiche Rohstoff an unterschiedlichen Produktionsstandorten hergestellt werden und die Chargenschwankungen teilweise deutlich stärker ausgeprägt sein können. Chargenschwankungen einzelner Rohstoffe können sich negativ sowohl auf die Prozessführung als auch auf die resultierenden Eigenschaften auswirken. Qualitätsmängel und Reklamationen in Folge von Chargenschwankungen sind aus Sicht des Verarbeiters sehr schwer gegenüber dem Rohstofflieferanten nachzuweisen und die entstehenden Qualitätskosten werden häufig vom Verarbeiter getragen.

Viele Hersteller von Kunststofffolien überprüfen im Rahmen der Wareneingangskontrolle den gelieferten Rohstoff regelmäßig auch in Bezug auf Chargenschwankungen. Dabei wird häufig der so genannte MFI (= melt flow index) bestimmt, der es sich um eine "Ein-Punkt-Methode" zur Bestimmung der Viskositätseigenschaften eines Kunststoffes handelt. Diese Messung hat jedoch mehrere Nachteile:
- Es ist eine aufwändige Laborprüfung, insbesondere wenn viele Kunststoffe häufig gemessen werden müssen.
- Die Reproduzier- und Vergleichbarkeit der Messergebnisse ist teilweise nur eingeschränkt gegeben, da die Messung vielen möglichen Störgrößen unterliegt
- Die Viskosität von Kunststoffen ist eine komplexe, von Temperatur und Schergeschwindigkeit abhängige Größe und diese wird durch die MFI "Einpunkt"-Messung nur unvollständig beschrieben.

Es ist Aufgabe der vorliegenden Erfindung, die voranstehenden Nachteile zumindest teilweise zu beheben. Insbesondere ist es Aufgabe der vorliegenden Erfindung, auf kostengünstige und einfache Weise eine erhöhte Sicherheit für die Richtigkeit der spezifischen Rezeptur bei der Verwendung im Extrusionsverfahren zur Verfügung zu stellen, ohne die Komplexität der Möglichkeiten für die spezifische Rezeptur zu reduzieren.

Voranstehende Aufgabe wird gelöst durch ein Verfahren mit den Merkmalen des Anspruchs 1 und eine Extrusionsvorrichtung mit den Merkmalen des Anspruchs 14. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Extrusionsvorrichtung und jeweils umgekehrt, so dass bzgl. der Offenbarung zu den einzelnen Erfindungsaspekten stets wechselseitig Bezug genommen wird bzw. werden kann.

Ein erfindungsgemäßes Verfahren dient der indirekten Bestimmung einer spezifischen Rezeptur bei einem Extrusionsverfahren in einer Extrusionsvorrichtung. Ein solches Verfahren weist die folgenden Schritte auf:
- Bestimmen von Messdaten zumindest eines Verfahrensparameters des Extrusionsverfahrens der Extrusionsvorrichtung,
- Vergleich der bestimmten Messdaten mit in Bezug auf die spezifische Rezeptur gespeicherten Speicherdaten des gleichen Verfahrensparameters,
- Bestimmen der Abweichung der Messdaten von den Speicherdaten des gleichen Verfahrensparameters und
- Vergleich der Abweichung mit einem vordefinierten Abweichungsschwellwert.
Das erfindungsgemäße Verfahren sieht zudem vor, dass in Abhängigkeit der bestimmten Messdaten in den gespeicherten Speicherdaten des gleichen Verfahrensparameters eine passsende spezifische Rezeptur gesucht wird. Außerdem sieht das erfindungsgemäße Verfahren vor, dass bei einer zulässigen Abweichung der Messdaten von den Speicherdaten unter dem vordefinierten Abweichungsschwellwert diese Messdaten den Speicherdaten zugefügt werden und zu einer notwendigen Veränderung oder Verfeinerung der Abweichungsschwellwerte genutzt werden.

Kern der vorliegenden Erfindung ist die indirekte Bestimmung der spezifischen Rezeptur über die Bestimmung von Messdaten zumindest eines Verfahrensparameters. Ein Vefahrensparameter ist zum Beispie! ein Maschinenparameter und/oder ein Prozessparameter. Eine Extrusionsvorrichtung wird mit einer Vielzahl von Einstellungen betrieben. Insbesondere physikalische Verfahrensparameter in Form von Temperaturen oder Temperaturverläufen, Kraftverläufen, Stromaufnahmen oder Druckverhältnissen sind Verfahrensparameter, die an unterschiedlichen Stellen bzw. über unterschiedliche Verlaufsstrecken spezifisch für die Extrusionsvorrichtung mit Bezug auf die jeweils verwendete Rezeptur sind. So wird beispielsweise eine erste spezifische Rezeptur bei anderen Temperaturen in der Extrusionsvorrichtung verarbeitet als eine zweite spezifische Rezeptur. Auch erzeugt eine höher viskose spezifische Rezeptur einen höheren Widerstand und dementsprechend ein höheres Drehmoment in einer Extruderschnecke als eine niedriger viskose spezifische Rezeptur. Somit ist es durch die Auswahl zumindest eines Verfahrensparameters, vorzugsweise von einer Vielzahl von Verfahrensparametern, möglich, einen Rückschluss auf die spezifische Rezeptur zu ziehen. Insbesondere erfolgt dies nach einer Kalibrierung und dem Zurverfügungstellen von Speicherdaten des gleichen Verfahrensparameters, so dass der erfindungsgemäße Vergleich zwischen den Messdaten und den Speicherdaten des gleichen Verfahrensparameters durchgeführt werden kann. Über den Vergleich mit einem vordefinierten Abweichungsschwellwert kann darüber hinaus eine Sicherheit gewährleistet sein, dass Materialschwankungen in zulässiger Weise innerhalb einer spezifischen Rezeptur zugelassen werden.

Das Bestimmen der Messdaten zumindest eines Verfahrensparameters und das weitere erfindungsgemäße Vorgehen ist mit einem datenspezifischen Fingerabdruck der spezifischen Rezeptur bezogen auf die Extrusionsvorrichtung gleichzusetzen. Dieser spezifische Fingerabdruck bezieht sich für die spezifische Extrusionsvorrichtung auf eine spezifische Rezeptur. Je mehr unterschiedliche Verfahrensparameter bestimmt werden können, desto feiner wird die Auflösung dieses Fingerabdrucks und desto wahrscheinlicher wird die Richtigkeit bei der Bestimmung der spezifischen Rezeptur. Insbesondere wird dieses Verfahren zur konsequenten und vorzugsweise kontinuierlichen Überwachung der Extrusionsvorrichtung während des Extrusionsverfahrens eingesetzt. So kann nicht nur die grundsätzlich eingestellte spezifische Rezeptur auf ihre Richtigkeit überprüft werden, sondern auch über den Verlauf die Richtigkeit der Rezeptur während des Extrusionsverfahrens überwacht werden. Insbesondere wird eine Kennlinie aufgezeichnet, wie sie später noch näher erläutert wird.
In Bezug auf die Qualitätskonstanz der verarbeiteten Rohstoffe bzw. unzulässige Chargenschwankungen kann in erfindungsgemäßer Weise die Überwachung durch die Bestimmung bereits während der Produktion, also insbesondere bereits in der Extrusionsvorrichtung erfolgen. Möglicherweise bestehende und auf schwankender Rohstoffqualität und/oder Rohstoffzusammensetzung basierende Fehler mit unzulässiger negativer Einwirkung auf die Qualität des Produktes werden auf diese Weise bereits im Produktionsprozess erkannt. Damit kann der Prozess frühzeitig unterbrochen werden, um so die Menge an produziertem Ausschuss deutlich zu verringern. Auch kann aus dem erzeugten Fingerabdruck der erkannten spezifischen Rezeptur ein Rückschluss gezogen werden auf denjenigen Rohstoff in der gesamten Zusammensetzung, welcher mit hoher Wahrscheinlichkeit für den Fehler verantwortlich ist. Dies führt zu schneller Fehlerbehebung und damit zu reduzierten Stillstandzeiten der Extrusionsvorrichtung.
Das erfindungsgemäße Verfahren kann damit insbesondere eine Ergänzung oder einen Ersatz derjenigen Wareneingangsprüfungen des gelieferten Rohstoffes darstellen, die zur Detektion von Chargenschwankungen eingesetzt werden. Während beispielsweise in einer MFI Messung eine etwaige Abweichung der Rohstoffviskosität von der Spezifikation über eine ggf. fehleranfällige Einpunktmessung bestimmt werden kann, bietet die Auswertung der Verfahrensparameter des Extrusionsprozesses deutlich genauere Möglichkeiten. So hat eine erhöhte Viskosität direkten Einfluss auf das Drehmoment des Extruderantriebes, auf die in die Schmelze eingebrachte Schererwärmung und damit auf die benötigte Heizleistung des Extruderzylinders und die resultierende Schmelzetemperatur, sowie auf die Druckverluste einzelner durchströmter Fließkanäle. Abweichungen solcher hier nur beispielhaft genannter Parameter lassen durch den Vergleich mit Daten aus der Produktionshistorie einen direkten Rückschluss auch auf Chargenschwankungen zu.

Das Extrusionsverfahren im Sinne der vorliegenden Erfindung dient insbesondere der Folienextrusion. Bevorzugt ist eine Blasfolienextrusion oder eine Gießfolienextrusion vorgesehen. Dabei kann eine Vielzahl von einzelnen Extrudern, welche jeweils eine Extruderschnecke aufweisen, die gemeinsame Extrusionsvorrichtung ausbilden.

Es kann vorteilhaft sein, wenn bei einem erfindungsgemäßen Verfahren als wenigstens ein Verfahrensparameter für die Bestimmung der Messdaten die Füllungscharakteristik eines Vorlagebehälters verwendet wird, insbesondere über eine Relation zwischen dem entnommenen Gewicht und dem entnommenen Volumen in einer Zeiteinheit, die Schüttdichte als Messdaten bestimmt wird. Ein Vorlagebehälter kann z. B. dazu dienen eine kontinuierliche Förderung einer Extruderschnecke mit einem diskontinuierlichen Auffüllen des Vorlagebehälters zu kombinieren. In dem Vorlagebehälter werden über Sensorik ein minimaler Füllstand und ein maximaler Füllstand überwacht. Erreicht durch die Entnahme mittels der Extruderschnecke der Füllstand des Vorlagebehälters das Minimum, wird der Vorlagebehälter mit Material nachgefüllt. Sobald während des Nachfüllens der Füllstand des Vorlagebehälters den Maximalwert erreicht hat, stoppt das Nachfüllen. Darüber hinaus wird das Gewicht des Vorlagebehälters überwacht. Über die Reduktion und damit die Höhenbestimmung und die Bekanntheit der geometrischen Abmessungen des Vorlagebehälters kann zusätzlich zum Gewicht auch das entnommene Volumen zwischen dem Minimalwert und dem Maximalwert der Beladung des Vorlagebehälters bestimmt werden. Aus dieser Korrelation zwischen Gewicht und entnommenen Volumen ist vorzugsweise die Schüttdichte berechenbar, welche als ein Messdatum einen Verfahrensparameter wiedergibt. Diese Schüttdichte korreliert wiederum z. B. mit dem in dem Vorlagebehälter aufgenommenen Material. Dabei kann das Material sowohl auf seine chemischen, als auch auf seine physikalischen Eigenschaften überwacht werden. Im Falle einer Schüttdichte ist z. B. eine Überwachung der richtigen Form des Granulats bzw. der Größe der Granulatkugeln möglich. Selbstverständlich kann eine erfindungsgemäße Extrusionsvorrichtung eine Vielzahl von Vorlagebehältern aufweisen, welche alle in erfindungsgemäßer Weise ausgebildet sind. So kann das erfindungsgemäße Verfahren zur Bestimmung der spezifischen Rezeptur sowohl auf Einzelmaterialien, welche in einzelnen Vorlagebehältern angeordnet sind als auch auf eine bereits erfolgte Kombination der Materialien angewendet werden.

Ein erfindungsgemäßes Verfahren kann dahingehend weitergebildet werden, das als wenigstens ein Verfahrensparameter für die Bestimmung der Messdaten das Verhältnis zwischen der Drehzahl und dem Drehmoment einer Extruderschnecke der Extrusionsvorrichtung verwendet wird. Durch die Auswahl einer spezifischen Rezeptur ergeben sich in der Extruderschnecke Scherkräfte, welche von Materialeigenschaften abhängen. Je nachdem mit welcher Drehzahl ein Motor die Extruderschnecke antreibt, ergibt sich ein notwendiges Drehmoment um diese Drehzahl zu erreichen. Das notwendige Drehmoment muss die vom Material bzw. der Rezeptur aufgebrachten Widerstandskräfte überwinden und gibt damit ebenfalls einen Hinweis auf das in der Extruderschnecke geförderte Material. Das Verhältnis zwischen Drehzahl und Drehmoment bezieht sich also auf das Material bzw. die Rezeptur, welche mit diesem Verhältnis in der Extruderschnecke der Extrusionsvorrichtung gefördert wird. Dies gilt für jede einzelne Extruderschnecke, so dass eine Extrusionsvorrichtung mit einer Vielzahl von Extruderschnecken eine Vielzahl dieser Messdaten überwachen kann.

Vorteilhaft ist es ebenfalls, wenn bei einem erfindungsgemäßen Verfahren als wenigstens ein Verfahrensparameter für die Bestimmung der Messdaten das sich einstellende Temperaturprofil über den axialen Verlauf einer Extruderschnecke der Extrusionsvorrichtung verwendet wird. Das Temperaturprofil ist insbesondere abhängig von dem eingesetzten Material und den darin eingebrachten Scherkräften durch die Extruderschnecke. Die Scherkräfte erzeugen Reibungskräfte im Material, welche eine Temperaturerhöhung mit sich bringen. Das Temperaturprofil kann weiter beeinflusst werden von Temperiervorrichtungen, wie Kühl- oder Heizeinrichtungen am Rand der Extruderschnecke. Das sich einstellende Temperaturprofil kann somit Rückschlüsse auf das geförderte und durch Scherung beanspruchte Material in der Extruderschnecke erlauben. Auch ist es möglich, dass ein bestehendes Temperaturprofil erreicht oder nicht erreicht wird, so dass dieses Verfehlen oder Erreichen der Vorgabe ebenfalls einen Vergleich zwischen Speicherdaten und Messdaten erlaubt.

Ebenfalls von Vorteil kann es sein, wenn bei einem erfindungsgemäßen Verfahren als wenigstens ein Verfahrensparameter für die Bestimmung der Messdaten der Stromverbrauch mindestens einer elektrischen Temperiervorrichtung verwendet wird. So ist es möglich, dass ein gewünschtes Temperaturprofil über den axialen Verlauf der Extruderschnecke vorgegeben wird, um das Extrusionsverfahren durchzuführen. Je nach eingesetztem Material reichen die erzeugten Scherkräfte aus, um dieses Temperaturprofil zu erreichen oder aber es muss nachgeheizt bzw. bei zu hoher Erwärmung gekühlt werden. Dieses nachträgliche Temperieren zusätzlich zu den Scherkräften wird über Temperiervorrichtungen in elektrischer Weise erzielt. Durch die Überwachung des Stromverbrauchs wird sichergestellt, dass eine Abweichung von dem zu erwartenden Aufwand für die elektrische Temperierung erkannt wird. Bei diesen Messdaten ist ebenfalls ein eindeutiger Rückschluss auf die in der Extruderschnecke enthaltene Materialmischung bzw. die entsprechende Rezeptur möglich.

Ein weiterer Vorteil ist es, wenn bei einem erfindungsgemäßen Verfahren als wenigstens ein Verfahrensparameter für die Bestimmung der Messdaten die Schmelzetemperatur an der Spitze einer Extruderschnecke der Extrusionsvorrichtung verwendet wird. Diese Schmelzetemperatur ist zu unterscheiden von der Schmelztemperatur des verwendeten Materials bzw. der Rezeptur. So wird im Laufe der Förderung durch die Extruderschnecke durch die Scherkräfte und eventuell vorhandene elektrische Temperiervorrichtungen die Temperatur der beförderten Rezeptur ansteigen, so dass ein Aufschmelzen erfolgt. Insbesondere wird ein Überhitzen erfolgen, welches wiederum Einfluss auf die Viskosität des geförderten Materials hat. An der Spitze wird sich also eine Schmelzetemperatur einstellen, welche ebenfalls wieder Rückschlüsse auf die Rezepturzusammensetzung bzw. das geförderte Material mit sich bringt. Dieses Bestimmen dieser Verfahrensparameter ist von großem Vorteil, da besonders kostengünstig und einfach nur ein einzelner Temperaturfühler diese Temperatur an der Extruderschneckenspitze zu messen hat.

Ebenfalls von Vorteil kann es sein, wenn bei einem erfindungsgemäßen Verfahren als wenigstens ein Verfahrensparameter für die Bestimmung der Messdaten der Schmelzedruck an der Spitze einer Extruderschnecke und/oder der Schmelzedruckverlust über eine definierte Schmelzekanalgeometrie der Extrusionsvorrichtung verwendet wird. Dieser Schmelzedruck hängt ab von dem nachfolgenden Druckverlust einer Düse nach der Extruderschnecke. Die Extrusionsvorrichtung wird über diese Düse das flüssige Material ausgeben und für die Produktion des Extrusionsproduktes zur Verfügung stellen. Je nach Viskosität des zu diesem Zeitpunkt aufgeschmolzenen Materials der Rezeptur wird sich ein unterschiedlicher Schmelzedruck an dieser Spitze einstellen. Vorzugsweise werden diese Messdaten in Relation zu den Messdaten der Schmelzetemperatur an der Spitze der Extruderschnecke gesetzt.

Vorteilhaft ist es darüber hinaus, wenn bei einem erfindungsgemäßen Verfahren als wenigstens ein Verfahrensparameter für die Bestimmung der Messdaten das Rollengewicht einer auf einer Wickelrolle aufgewickelten Folienbahn verwendet wird. Dabei kann z. B. ein Bezug auf einen Längenabschnitt, insbesondere den laufenden Meter, der aufgewickelten Folienbahn erzeugt werden. Das Rollengewicht wird vorzugsweise in Teilabschnitten bestimmt, so dass bereits vor Beendigung des Verfahrens ein möglicher Fehler auch durch diese Messdaten bestimmbar wird. Vorzugsweise erfolgen ein relativer und/oder ein absoluter Vergleich. Relativ kann das bestimmte Gewicht der Wickelrolle mit den eingesetzten Ausgangsmaterialien in Relation gesetzt werden, um mögliche Fehler zu erkennen. Auch absolut kann das zu erwartende Quadratzentimetergewicht der Folienbahn vorbestimmt und als Speicherdatum vorgesehen sein, um zum Vergleich mit entsprechenden Messdaten zu dienen.

Ebenfalls von Vorteil ist es, wenn bei einem erfindungsgemäßen Verfahren als wenigstens ein Verfahrensparameter für die Bestimmung der Messdaten eine Absorptionscharakteristik eines Extrusionsproduktes verwendet wird. Insbesondere erfolgt dies hinsichtlich zumindest einer der folgenden Arten:
- β-Strahlung
- Infrarot-Strahlung
- UV-Strahlung
- Laserstrahlung
- Ultraschall

Dabei kann sowohl die Transmission als auch die Reflexion bestimmt werden. Je nach verwendetem Material kann auch hier ein Rückschluss auf die Rezeptur gezogen werden, so dass auch diese Messdaten in ein erfindungsgemäßes Verfahren einfließen können.

Ein weiterer Vorteil ist erzielbar, wenn bei einem erfindungsgemäßen Verfahren als wenigstens ein Verfahrensparameter für die Bestimmung der Messdaten ein relativer Vergleich der Viskosität, insbesondere auf Basis des Druckverlustes in der Extrusionsvorrichtung und/oder auf Basis der Stromaufnahme der Extrusionsvorrichtung, verwendet wird. Damit wird es möglich bereits in der Extrusionsvorrichtung, vorzugsweise innerhalb des Extruders, Rückschlüsse auf die Rezeptur zu erzielen. Neben einer direkten Bestimmung der Viskosität durch eine entsprechende Vorrichtung können vorzugsweise auch indirekte Parameter, insbesondere Maschinen- und/oder Prozessparameter, vorgesehen werden, um einen Rückschluss oder eine rechnerische Bestimmung einer etwaigen Viskositätsabweichung durchzuführen. Damit werden die Vorteile der reduzierten Ausschussmenge und der schnellen Identifikation der Fehlerquelle in der Rezeptur noch weiter verbessert.

Auch von Vorteil ist es, wenn bei einem erfindungsgemäßen Verfahren auf Basis der Bestimmung der Messdaten eine Kennlinie, insbesondere über den Produktionsverlauf und/oder über den Verlauf einer Charge, aufgezeichnet wird. So werden Rohstoffe teilweise in Silos vorgehalten, welche bei Unterschreiten eines Mindestfüllgrades von oben nachbefüllt werden. So kann es in dem Silo zu einer Vermischung unterschiedlicher Chargen eines Rohstoffes kommen, insbesondere sogar von unterschiedlichen Lieferanten. Durch die Aufzeichnung einer Kennlinie wird insbesondere kontinuierlich oder im Wesentlichen kontinuierlich zu definiert beabstandeten Zeitpunkten die Überwachung der Rezeptur möglich. Auch eine möglicherweise als Fehlerquelle bestehende Vermischung unterschiedlicher Chargen in einem Silo können auf diese Weise erkannt werden. Vorzugsweise erfolgt daher die Aufzeichnung der Kennlinie chargenspezifisch für die Herstellung eines Produktes und/oder fortlaufend über den Produktionsprozess der Extrusionsvorrichtung.

Durch ein erfindungsgemäßes Verfahren ist es insbesondere möglich, durch den Vergleich der gewonnenen viskositätsbezogenen Daten eine Aussage über Chargenschwankungen einzelner Rohstoffe zu treffen. Insbesondere ist dies möglich als Ergänzung und/oder als Ersatz für eine Wareneingangsprüfung, zum Beispiel in Form einer sogenannten MFI-Messung. Diese Aussage über Chargenschwankungen kann dazu genutzt werden, unzulässige Abweichungen von der vertraglich vereinbarten Rohstoffspezifikation oder der vereinbarten Spezifikation der hergestellten Folie zu erkennen. Auf Basis dieses Erkennens ist es möglich, notwendige Maßnahmen zur weiteren Überprüfung des Rohstoffes und/oder des Endproduktes herzuleiten.

Ebenfalls ist es durch ein erfindungsgemäßes Verfahren möglich, dass bei einer Abweichung der Messdaten von den Speicherdaten geprüft wird, ob die Abweichung in Bezug auf die Anforderungen des Prozesses, des Rohstoffs oder des Endproduktes zulässig ist oder nicht. Auch ist es möglich, dass die bestimmten Messdaten im Falle einer unzulässigen Abweichung dazu genutzt werden, die definierten Abweichungsschwellenwerte zu bestätigen und/oder zu verfeinern und/oder zu korrigieren.

Ebenfalls von Vorteil kann es sein, wenn bei einem erfindungsgemäßen Verfahren Messdaten von einer Mehrzahl von wenigstens zwei unterschiedlichen Verfahrensparametern bestimmt werden, wobei die Abweichungen korreliert und/oder addiert werden, insbesondere in gewichteter Weise. Das bedeutet, dass der Fingerabdruck einer spezifischen Rezeptur noch genauer bestimmt werden kann. Insbesondere wird eine möglichst große Anzahl von Verfahrensparametern mit Messdaten erzeugt, so dass eine besonders breite Überwachung erfolgen kann. Dabei werden die einzelnen Abweichungen addiert, so dass eine Gesamtabweichung und dementsprechend eine einzige normierte Kennzahl für die Auslösung eines Alarms bzw. die Bestimmung der korrekten spezifischen Rezeptur ausreicht. Nachdem unterschiedliche Verfahrensparameter unterschiedlich wichtige Aussagen über die einzelnen Rezepturbestandteile treffen können, können die einzelnen Verfahrensparameter und die zugehörigen Messdaten gewichtet werden. Die Gewichtung kann auch auf die entsprechenden Abweichungen erfolgen, so dass die Addition in gewichteter Weise erfolgt.

Ein weiterer Vorteil ist es, wenn bei einem erfindungsgemäßen Verfahren zumindest zwei Abweichungsschwellwerte vorgesehen sind, wobei mit dem Überschreiten der Abweichungsschwellwerte unterschiedliche Alarmstufen korrelieren. So kann z. B. bei einer nur leichten Abweichung eine Information des Bedienpersonals erfolgen. Ein anschließendes Überprüfen der richtigen Materialzusammensetzung für die Rezeptur ist die Folge. Wird eine besonders starke Abweichung, also das Überschreiten eines hohen Abweichungsschwellwerts erkannt, so kann dies z. B. zum sofortigen Stopp der Maschine und zum zwangsläufigen Überprüfen durch das Bedienpersonal verwendet werden.

Bei dem erfindungsgemäßen Verfahren wird in Abhängigkeit der bestimmten Messdaten in den gespeicherten Speicherdaten des gleichen Verfahrensparameters eine passende spezifische Rezeptur gesucht. Für den Fall einer zu hohen Abweichung wird also auf diese Weise ein Hinweis möglich, welche spezifische Rezeptur fälschlicherweise eingestellt ist. So können Unterschiede zwischen den beiden spezifischen Rezepturen herausgefiltert werden, so dass dem Bedienpersonal ein expliziter Hinweis auf das falsche Material in der spezifischen Rezeptur gegeben werden kann.

Bei dem erfindungsgemäßen Verfahren werden bei einer Abweichung der Messdaten von den Speicherdaten unter dem vordefinierten Abweichungsschwellwert diese Messdaten den Speicherdaten zugefügt, und insbesondere wird ein Mittelwert mit diesen ausgebildet. Dabei kann entweder ein Pool aus vielen verschiedenen Datensätzen zur Verfügung gestellt werden oder ein Überschreiben der alten Speicherdaten mit dem neuen Mittelwert erfolgen. In beiden Fällen handelt es sich um ein selbstlernendes Verfahren, so dass über die dauernde Nutzung die Speicherdaten immer besser die jeweilige spezifische Rezeptur wiedergeben. Auch kann auf diese Weise eine Standardabweichung erkannt und/oder definiert werden, die dementsprechend eine Auswirkung bzw. eine Veränderung der Abweichungsschwellwerte mit sich bringt.

Ebenfalls Gegenstand der vorliegenden Erfindung ist eine Extrusionsvorrichtung zur Herstellung eines Extrusionsproduktes, aufweisend wenigstens eine Sensorvorrichtung und eine Kontrolleinheit, die zur Ausführung des erfindungsgemäßen Verfahrens ausgebildet ist.

Dementsprechend bringt eine erfindungsgemäße Extrusionsvorrichtung die gleichen Vorteile mit sich, wie sie ausführlich mit Bezug auf ein erfindungsgemäßes Verfahren erläutert worden sind. Eine erfindungsgemäße Extrusionsvorrichtung dient insbesondere der Herstellung eines Extrusionsproduktes in Form einer Folie, insbesondere in Form einer Blasfolie oder einer Gießfolie.

Die vorliegende Erfindung wird näher erläutert anhand der beigefügten Zeichnungsfiguren. Die dabei verwendeten Begrifflichkeiten "links", "rechts", "oben" und "unten" beziehen sich auf eine Ausrichtung der Zeichnungsfiguren mit normal lesbaren Bezugszeichen. Es zeigen schematisch:
- Fig. 1: eine erste schematische Darstellung einer Ausführungsform einer erfindungsgemäßen Extrusionsvorrichtung,
- Fig. 2: eine schematische Darstellung eines Schrittes eines erfindungsgemäßen Verfahrens.

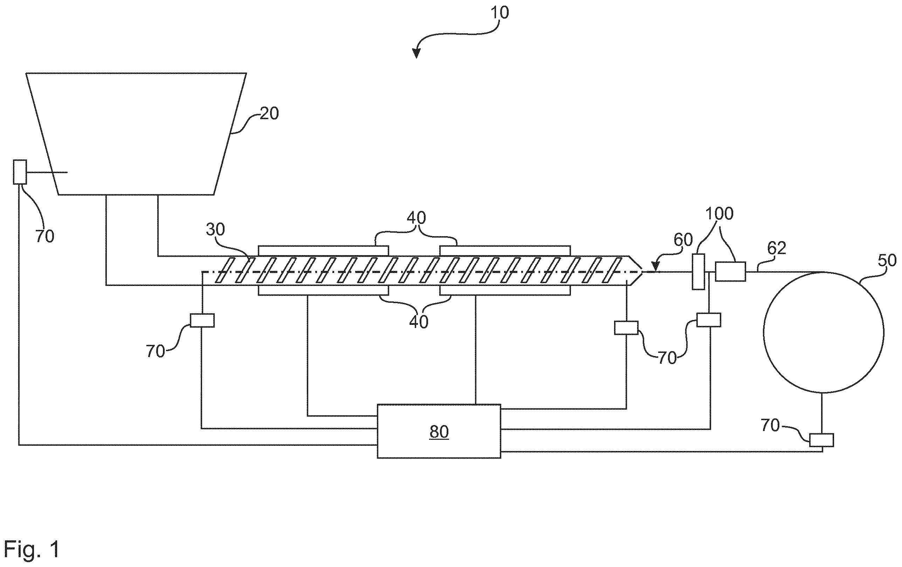

Figur 1 zeigt eine Ausführungsform einer erfindungsgemäßen Extrusionsvorrichtung 10, bei welcher ein erfindungsgemäßes Verfahren eingesetzt werden kann. Diese Extrusionsvorrichtung 10 weist beispielhaft eine Extruderschnecke 30 auf, welche über einen Vorlagebehälter 20 mit Material bzw. einer Rezeptur aus verschiedenen Materialien versorgt wird. Eine Vielzahl von Sensorvorrichtungen 70 kann an unterschiedlichen Stellen der Extrusionsvorrichtung 10 Messdaten zu unterschiedlichen Verfahrensparametern bestimmen.

So ist z. B. der Vorlagebehälter 20 mit einer Sensorvorrichtung 70 zur gravimetrischen Bestimmung und zur Füllstandbestimmung ausgestattet. Darüber hinaus ist eine Sensorvorrichtung 70 am linken Ende der Drehachse der Extruderschnecke 30 zu erkennen, welche Drehzahl und/oder Drehmoment der Extruderschnecke 30 wahrnehmen kann. Am rechten Ende der Extruderschnecke 30 findet sich eine Sensorvorrichtung 70, die z. B. die Schmelzetemperatur und/oder den Schmelzedruck an dieser Position erkennen kann. Ebenfalls rechts gelagert und der Düse der Extrusionsvorrichtung 10 nachgeordnet befindet sich eine Sensorvorrichtung 70, die z. B. das Absorptionsverhalten des Extrusionsproduktes 60, z. B. in Form einer Folienbahn 62, bestimmen kann. Nicht zuletzt ist es möglich über die ganz rechts angeordnete Sensorvorrichtung 70 das Rollengewicht einer Wickelrolle 50 zu bestimmen, auf welcher das Extrusionsprodukt 60 aufgewickelt wird. Sämtliche Sensorvorrichtungen 70 geben die bestimmten Messdaten an eine Kontrolleinheit 80 weiter, in welcher ein erfindungsgemäßes Verfahren ausgeführt wird. Weiter sind in der Figur 1 zwischen der Düse für das Extrusionsprodukt 60 und der Wickelrolle 50 Werkzeugvorrichtungen 100 angeordnet, dabei kann es sich z. B. um die Kühlung, eine Kalibrierung oder eine Führung des Extrusionsproduktes 60 handeln. Auch ein Blaskopf als Werkzeugvorrichtung 100 ist im Rahmen der vorliegenden Erfindung denkbar.

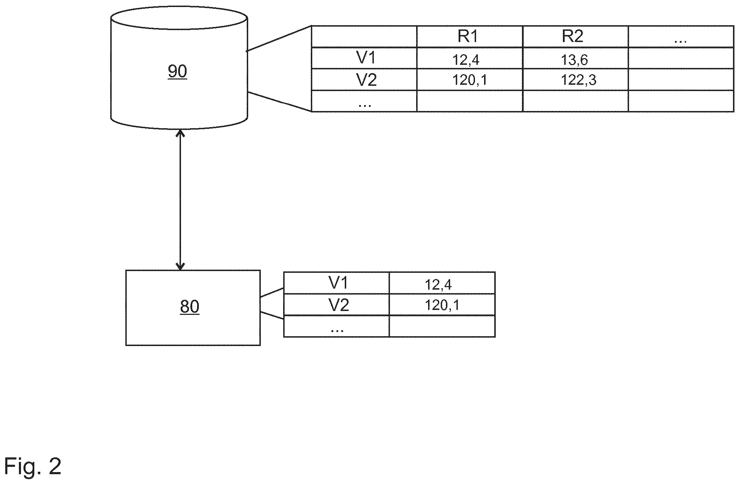

Figur 2 zeigt einen Teil der Ausführung eines erfindungsgemäßen Verfahrens. So werden z. B. über die Sensorvorrichtungen 70 gemäß der Ausführungsform der Figur 1 zu einer Vielzahl von Verfahrensparametern Messdaten bestimmt. Die Messdaten der einzelnen Verfahrensparameter des Extrusionsverfahrens sind hier als erster Verfahrensparameter V1 mit dem Wert 12,4 und als zweiter Verfahrensparameter V2 mit dem Wert 120,1 versehen. Durch die Punkte wird angezeigt, dass selbstverständlich eine größere Anzahl von Verfahrensparametern der Kontrolleinheit 80 zugeführt werden kann. Die Kontrolleinheit 80 vergleicht die bestimmten Messdaten in einer Datenbank 90 mit dort gespeicherten Speicherdaten, die für einzelne Rezepturen R1 und R2 spezifisch sind. Wie aus diesem Vergleich hier zu erkennen ist, muss es sich aufgrund der Verfahrensparameter V1 und V2 um die Rezeptur R1 handeln.

Ist in diesem Fall die gewünschte spezifische Rezeptur mit R1 gleichzusetzen, so kann das Verfahren fortgesetzt werden. Ist jedoch eine andere spezifische Rezeptur als R1 gewünscht, so wird in diesem Fall Alarm gegeben, so dass eine Überprüfung der eingestellten Rezeptur und der verwendeten Materialien erfolgen kann.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Extrusionsvorrichtung
- 20: Vorlagebehälter
- 30: Extruderschnecke
- 40: Temperiervorrichtung
- 50: Wickelrolle
- 60: Extrusionsprodukt
- 62: Folienbahn
- 70: Sensorvorrichtung
- 80: Kontrolleinheit
- 90: Datenbank
- 100: Werkzeugvorrichtung

- V1: erster Verfahrensparameter
- V2: zweiter Verfahrensparameter
- R1: erste Rezeptur
- R2: zweite Rezeptur

## Patentansprüche

1. Verfahren für die indirekte Bestimmung einer spezifischen Rezeptur bei einem Extrusionsverfahren in einer Extrusionsvorrichtung (10), aufweisend die folgenden Schritte:
- Bestimmen von Messdaten zumindest eines Verfahrensparameters des Extrusionsverfahrens der Extrusionsvorrichtung (10),
- Vergleich der bestimmten Messdaten mit in Bezug auf die spezifische Rezeptur gespeicherten Speicherdaten des gleichen Verfahrensparameters,
- Bestimmen der Abweichung der Messdaten von den Speicherdaten des gleichen Verfahrensparameters und
- Vergleich der Abweichung mit einem vordefinierten Abweichungsschwellwert, wobei in Abhängigkeit der bestimmten Messdaten in den gespeicherten Speicherdaten des gleichen Verfahrensparameters eine passsende spezifische Rezeptur gesucht wird,
**dadurch gekennzeichnet, dass** bei einer zulässigen Abweichung der Messdaten von den Speicherdaten unter dem vordefinierten Abweichungsschwellwert diese Messdaten den Speicherdaten zugefügt werden und zu einer notwendigen Veränderung oder Verfeinerung der Abweichungsschwellwerte genutzt werden.

2. Verfahren nach Anspruch 1,
**dadurch gekennzeichnet,**
**dass** als wenigstens ein Verfahrensparameter für die Bestimmung der Messdaten die Füllungscharakteristik eines Vorlagebehälters (20) verwendet wird, insbesondere über eine Relation zwischen dem entnommenen Gewicht und dem entnommenen Volumen in einer Zeiteinheit die Schüttdichte als Messdaten bestimmt wird.

3. Verfahren nach einem der vorangegangenen Ansprüche,
**dadurch gekennzeichnet,**
**dass** als wenigstens ein Verfahrensparameter für die Bestimmung der Messdaten das Verhältnis zwischen der Drehzahl und dem Drehmoment einer Extruderschnecke (30) der Extrusionsvorrichtung (10) verwendet wird.

4. Verfahren nach einem der vorangegangenen Ansprüche,
**dadurch gekennzeichnet,**
**dass** als wenigstens ein Verfahrensparameter für die Bestimmung der Messdaten das sich einstellende Temperaturprofil über den axialen Verlauf einer Extruderschnecke (30) der Extrusionsvorrichtung (10) verwendet wird und/oder dass als wenigstens ein Verfahrensparameter für die Bestimmung der Messdaten der Stromverbrauch mindestens einer elektrischen Temperiervorrichtung (40) verwendet wird.

5. Verfahren nach einem der vorangegangenen Ansprüche,
**dadurch gekennzeichnet,**
**dass** als wenigstens ein Verfahrensparameter für die Bestimmung der Messdaten die Schmelzetemperatur an der Spitze einer Extruderschnecke (30) der Extrusionsvorrichtung (10) verwendet wird.

6. Verfahren nach einem der vorangegangenen Ansprüche,
**dadurch gekennzeichnet,**
**dass** als wenigstens ein Verfahrensparameter für die Bestimmung der Messdaten der Schmelzedruck an der Spitze einer Extruderschnecke (30) und/oder der Schmelzedruckverlust über eine definierte Schmelzekanalgeometrie der Extrusionsvorrichtung (10) verwendet wird.

7. Verfahren nach einem der vorangegangenen Ansprüche,
**dadurch gekennzeichnet,**
**dass** als wenigstens ein Verfahrensparameter für die Bestimmung der Messdaten der Schmelzedruckverlust über eine definierte Schmelzekanalgeometrie der Extrusionsvorrichtung (10) verwendet wird und/oder dass als wenigstens ein Verfahrensparameter für die Bestimmung der Messdaten das Rollengewicht einer auf einer Wickelrolle (50) aufgewickelten Folienbahn (62) verwendet wird.

8. Verfahren nach einem der vorangegangenen Ansprüche,
**dadurch gekennzeichnet,**
**dass** als wenigstens ein Verfahrensparameter für die Bestimmung der Messdaten eine Absorptionscharakteristik eines Extrusionsproduktes (60) verwendet wird, insbesondere hinsichtlich zumindest einer der folgenden Arten:
- β-Strahlung
- Infrarot-Strahlung
- UV-Strahlung
- Laserstrahlung
- Ultraschall

9. Verfahren nach einem der vorangegangenen Ansprüche,
**dadurch gekennzeichnet,**
**dass** als wenigstens ein Verfahrensparameter für die Bestimmung der Messdaten ein Viskositätsvergleich, insbesondere auf Basis des Druckverlustes in der Extrusionsvorrichtung (10) und/oder auf Basis der Stromaufnahme der Extrusionsvorrichtung (10) und/oder auf Basis der Schmelzetemperatur, verwendet wird.

10. Verfahren nach einem der vorangegangenen Ansprüche,
**dadurch gekennzeichnet,**
**dass** auf Basis der Bestimmung der Messdaten eine Kennlinie, insbesondere über den Produktionsverlauf und/oder über den Verlauf einer Charge, aufgezeichnet wird.

11. Verfahren nach einem der vorangegangenen Ansprüche,
**dadurch gekennzeichnet,**
**dass** Messdaten von einer Mehrzahl von wenigstens zwei unterschiedlichen Verfahrensparametern bestimmt werden, wobei die Abweichungen korreliert werden, insbesondere in gewichteter Weise.

12. Verfahren nach einem der vorangegangenen Ansprüche,
**dadurch gekennzeichnet,**
**dass** zumindest zwei Abweichungsschwellwerte vorgesehen sind, wobei mit dem Überschreiten der Abweichungsschwetlwerte unterschiedliche Alarmstufen korrelieren, insbesondere ein Stoppsignal erzeugt wird.

13. Verfahren nach einem der vorangegangenen Ansprüche,
**dadurch gekennzeichnet,**
**dass** bei der notwendigen Veränderung oder Verfeinerung der Abweichungsschwellwerte ein Mittelwert mit den Messdaten ausgebildet wird.

14. Extrusionsvorrichtung (10) zur Herstellung eines Extrusionsproduktes (60), aufweisend wenigstens eine Sensorvorrichtung (70) und eine Kontrolleinheit (80), die zur Ausführung eines Verfahrens mit den Merkmalen eines der Ansprüche 1 bis 13 ausgebildet ist.

15. Extrusionsvorrichtung (10) nach Anspruch 14,
**dadurch gekennzeichnet,**
**dass** diese für die Herstellung eines Extrusionsproduktes (60) in Form einer Folie, insbesondere in Form einer Blasfolie oder einer Gießfolie ausgebildet ist.

## Claims

1. A method for the indirect determination of a specific formulation during an extrusion process in an extrusion device (10), having the following steps:
- Determination of measurement data of at least one process parameter of the extrusion process of the extrusion device (10),
- comparison of the specific measurement data with memory data of the same process parameter stored with respect to the specific formulation,
- determination of the deviation of the measurement data from the memory data of the same process parameter and
- comparison of the deviation of a predefined deviation threshold value, wherein a suitable specific formulation is sought in the stored memory data of the same process parameter depending on the determined measurement data,
**characterized in**
**that** in the event of a permissible deviation of the measurement data from the memory data below the predefined deviation threshold value said measurement data are added to the storage data and are used for a necessary change or refinement of the deviation threshold values.

2. The method according to claim 1,
**characterized in**
**that** the filling characteristic of a collection container (20) is used as at least one process parameter for the determination of the measurement data, in particular the bulk density is determined as measurement data by means of a relation between the weight removed and the volume removed in a time unit.

3. The method according to any one of the preceding claims,
**characterized in**
**that** ratio between the speed and the torque of an extruder screw (30) of the extrusion device (10) is used as at least one process parameter for the determination of the measurement data.

4. The method according to any one of the preceding claims,
**characterized in**
**that** the resulting temperature profile over the axial course of an extruder screw (30) of the extrusion device (10) is used as at least one process parameter for the determination of the measurement data and/or that the current consumption at least of one electrical temperature control device (40) is used as at least one process parameter for the determination of the measurement data.

5. The method according to any one of the preceding claims,
**characterized in**
**that** the melt temperature at the tip of an extruder screw (30) of the extrusion device (10) is used as at least one process parameter for the determination of the measurement data.

6. The method according to any one of the preceding claims,
**characterized in**
**that** the melt pressure at the tip of an extruder screw (30) and/or the melt pressure loss over a defined melt channel geometry of the extrusion device (10) is used as at least one process parameter for the determination of the measurement data.

7. The method according to any one of the preceding claims,
**characterized in**
**that** the melt pressure loss over a defined melt channel geometry of the extrusion device (10) is used as at least one process parameter for the determination of the measurement data and/or that the roller weight of a film web (62) wound on a winding roll (50) is used as at least one process parameter for the determination of the measurement data.

8. The method according to any one of the preceding claims,
**characterized in**
**that** an absorption characteristic of an extrusion product (60) is used as at least one process parameter for the determination of the measurement data, in particular with regard to at least one of the following types:
- β radiation
- infrared radiation
- UV radiation
- laser radiation
- ultrasound

9. The method according to any one of the preceding claims,
**characterized in**
**that** a viscosity comparison, in particular on the basis of the pressure loss in the extrusion device (10) and/or on the basis of the current consumption of the extrusion device (10) and/or on the basis of the melt temperature, is used as at least one process parameter for the determination of the measurement data.

10. The method according to any one of the preceding claims,
**characterized in**
**that** a characteristic curve, in particular, over the course of production and/or over the course of a batch, is recorded on the basis of the determination of the measurement data.

11. The method according to any one of the preceding claims,
**characterized in**
**that** measurement data are determined from a plurality of at least two different process parameters, wherein the deviations are correlated, in particular in a weighted manner.

12. The method according to any one of the preceding claims,
**characterized in**
**that** at least two deviation threshold values are provided, wherein when the deviation threshold values are exceeded different alarm stages correlate, in particular a stop signal is generated.

13. The method according to any one of the preceding claims,
**characterized in**
**that** an average value is formed with the measurement data when a change or refinement of the deviation threshold values is necessary.

14. An extrusion device (10) for producing an extrusion product (60), having at least one sensor device (70) and a control unit (80), which is designed for carrying out a method with the features of any one of claims 1 to 13.

15. The extrusion device (10) according to claim 14,
**characterized in**
**that** said extrusion device is designed for the production of an extrusion product (60) in the form of a film, in particular in the form of a blown film or a cast film.

## Revendications

1. Procédé pour la détermination indirecte d'une recette spécifique lors d'un procédé d'extrusion dans un dispositif d'extrusion (10), comprenant les étapes suivantes :
- détermination de données de mesure d'au moins un paramètre de procédé du procédé d'extrusion du dispositif d'extrusion (10),
- comparaison des données de mesure déterminées avec des données enregistrées, enregistrées relativement à la recette spécifique, du même paramètre de procédé,
- détermination de l'écart entre les données de mesure et les données enregistrées du même paramètre de procédé et
- comparaison de l'écart avec une valeur seuil d'écart prédéfinie, dans lequel, en fonction des données de mesure déterminées dans les données enregistrées du même paramètre de procédé, une recette adaptée est recherchée,
**caractérisé en ce que**, dans le cas d'un écart admissible entre les données de mesure et les données enregistrées en dessous de la valeur seuil d'écart prédéfinie, ces données de mesure sont ajoutées aux données enregistrées et utilisées pour une modification ou un affinement nécessaire des valeurs seuils d'écart.

2. Procédé selon la revendication 1,
**caractérisé en ce que**
en tant qu'au moins un paramètre de procédé pour la détermination des données de mesure, la caractéristique de remplissage d'un récipient de stockage (20) est utilisée, plus particulièrement la densité de produit en vrac est déterminée en tant que données de mesure par l'intermédiaire d'une relation entre le poids prélevé et le volume prélevé par unité de temps.

3. Procédé selon l'une des revendications précédentes,
**caractérisé en ce que**
en tant qu'au moins un paramètre de procédé pour la détermination des données de mesure, le rapport entre la vitesse de rotation et le couple d'une vis sans fin d'extrusion (30) du dispositif d'extrusion (10) est utilisé.

4. Procédé selon l'une des revendications précédentes,
**caractérisé en ce que**
en tant qu'au moins un paramètre de procédé pour la détermination des données de mesure, le profil de température qui règne sur le tracé axial d'une vis sans fin d'extrusion (30) du dispositif d'extrusion (10) est utilisé et/ou **en ce que**, en tant qu'au moins un paramètre de procédé pour la détermination des données de mesure, la consommation de courant d'au moins un dispositif de régulation de température électrique (40) est utilisée.

5. Procédé selon l'une des revendications précédentes,
**caractérisé en ce que**
en tant qu'au moins un paramètre de procédé pour la détermination des données de mesure, la température de fusion à l'extrémité d'une vis sans fin d'extrusion (30) du dispositif d'extrusion (10) est utilisée.

6. Procédé selon l'une des revendications précédentes,
**caractérisé en ce que**
en tant qu'au moins un paramètre de procédé pour la détermination des données de mesure, la pression de fusion à l'extrémité d'une vis sans fin d'extrusion (30) et/ou la perte de pression de fusion par l'intermédiaire d'une géométrie de canal de fusion définie du dispositif d'extrusion (10) est utilisée.

7. Procédé selon l'une des revendications précédentes,
**caractérisé en ce que**
en tant qu'au moins un paramètre de procédé pour la détermination des données de mesure, la perte de pression de fusion par l'intermédiaire d'une géométrie de canal de fusion définie du dispositif d'extrusion (10) est utilisée et/ou **en ce que**, en tant qu'au moins un paramètre de procédé pour la détermination des données de mesure, le poids d'une bande de film (62) enroulée sur une bobine (50) est utilisé.

8. Procédé selon l'une des revendications précédentes,
**caractérisé en ce que**
en tant qu'au moins un paramètre de procédé pour la détermination des données de mesure, une caractéristique d'absorption d'un produit d'extrusion (60) est utilisée, plus particulièrement en lien avec au moins un des types suivants :
- rayonnement β
- rayonnement infra-rouge
- rayonnement UV
- rayon laser
- ultrasons

9. Procédé selon l'une des revendications précédentes,
**caractérisé en ce que**
en tant qu'au moins un paramètre de procédé pour la détermination des données de mesure, une comparaison de viscosité, plus particulièrement sur la base de la perte de pression dans le dispositif d'extrusion (10) et/ou sur la base de la consommation de courant du dispositif d'extrusion (10) et/ou sur la base de la température de fusion, utilisée.

10. Procédé selon l'une des revendications précédentes,
**caractérisé en ce que**
sur la base de la détermination des données de mesure, une courbe caractéristique est enregistrée, plus particulièrement par l'intermédiaire du processus de production et/ou du parcours d'un lot.

11. Procédé selon l'une des revendications précédentes,
**caractérisé en ce que**
les données de mesure sont déterminées par une pluralité d'au moins deux paramètres de procédé différents, dans lequel les écarts sont corrélés, plus particulièrement de manière pondérée.

12. Procédé selon l'une des revendications précédentes,
**caractérisé en ce que**
au moins deux valeurs seuils d'écart sont prévues, dans lequel, avec le dépassement des valeurs seuils d'écart, sont corrélés différents niveaux d'alarme, plus particulièrement un signal d'arrêt est généré.

13. Procédé selon l'une des revendications précédentes,
**caractérisé en ce que**
lors de la modification ou de l'affinement nécessaire des valeurs seuils d'écart, une valeur moyenne est calculée avec les données de mesure.

14. Dispositif d'extrusion (10) pour la fabrication d'un produit d'extrusion (60), comprend au moins un dispositif de capteur (70) et une unité de contrôle (80), qui est conçue pour l'exécution d'un procédé avec les caractéristiques d'une des revendications 1 à 13.

15. Dispositif d'extrusion (10) selon la revendication 14,
**caractérisé en ce que**
celui-ci est conçu pour la fabrication d'un produit d'extrusion (60) sous la forme d'un film, plus particulièrement sous la forme d'un film soufflé ou d'un film moulé.
